# EUROPÄISCHE PATENTSCHRIFT

(11) **EP 0 540 702 B1**
(45) Veröffentlichungstag und Bekanntmachung des Hinweises auf die Patenterteilung: **22.11.1995**
(21) Anmeldenummer: 92909096.7
(22) Anmeldetag: 27.04.1992
(51) Int. Cl.: G01P 3/486

(54) **OPTO-ELEKTRONISCHE SENSORANORDNUNG SOWIE EIN VERFAHREN ZUM BESTIMMEN VON DREHZAHL UND WINKELLAGE ROTIERENDER EINRICHTUNGEN**
OPTO-ELECTRONIC SENSOR ARRANGEMENT AND PROCESS FOR DETERMINING THE ROTATION SPEED AND RELATIVE POSITION OF ROTATING DEVICES
DISPOSITIF DETECTEUR OPTO-ELECTRONIQUE ET PROCEDE POUR LA DETERMINATION DE LA VITESSE DE ROTATION ET DE LA POSITION RELATIVE DE DISPOSITIFS ENTRAINES EN ROTATION

(30) Priorität: 21.05.1991 DE 4116579
(43) Veröffentlichungstag der Anmeldung: 12.05.1993
(73) Patentinhaber: PRÜFTECHNIK DIETER BUSCH AG, 85737 Ismaning (DE)
(72) Erfinder: LYSEN, Heinrich, D-8045 Ismaning (DE)
(74) Vertreter: Benedum, Ulrich Max, Dr.
(86) Internationale Anmeldenummer: DE9200343
(87) Internationale Veröffentlichungsnummer: WO9221035

(56) Entgegenhaltungen:
- DE-A- 1 673 447
- DE-A- 3 730 102
- GB-A- 1 182 027
- TECHNISCHES MESSEN TM. Bd. 58, Nr. 1, Januar 1991, MUNCHEN DE Seiten 23 - 28; WAGNER ET AL: "Messung von Drehgeschwindigkeitsänderungen mit selbsteinstellendem Laser-Stroboskop"

## Beschreibung

Die Erfindung betrifft eine opto-elektronische Sensoranordnung und ein Verfahren zum Bestimmen von Drehzahl und Winkellage rotierender Einrichtungen, insbesondere von Wellen, mit einer optischen Markierung.

Die Drehzahl und die Winkellage von rotierenden Einrichtungen werden in der Regel bestimmt, indem auf den rotierenden Körper, der Welle, Markierungen aufgebracht und deren Durchgang in einem Erfassungsabschnitt signalmäßig erfaßt werden. Bei opto-elektronischen Drehzahlmessern bestehen die Signalgeber üblicherweise aus Markierungsstrichen, Reflektoren oder aus hellen und dunklen Feldern.

So beschreibt die DE-OS 39 03 579 eine Einrichtung zum Erkennen von Drehgeschwindigkeitsänderungen, bei der auf den rotierenden Teilen helle und dunkle Marken angebracht und intermittierend mit einer Frequenz (f) beleuchtet sind. Das von den Marken reflektierte Licht wird von einer Linse auf einen Lichtempfänger mit zwei Photodetektoren abgebildet. Die beiden Ausgänge der Photodetektoren sind in Differenz geschaltet, so daß ein Signal "Null" vorliegt, wenn beide Photodetektoren mit gleicher Lichtintensität beleuchtet sind. Die Frequenz (f) der Beleuchtungsquelle ist derart geregelt, daß ein stehendes Abbild der Marken auf die Photodetektoren fällt. Die Signalfolge wird ausgewertet und daraus die Drehgeschwindigkeitsänderung ermittelt. Bei einer Vorrichtung nach der DE-OS 39 03 579 ist jedoch nachteilig, daß sie auf dem rotierenden Körper qualitativ gute Markierungen in konstanten Abständen und gleicher Schwärzung erfordert. Es ist praktisch unmöglich, solche Markierungen ohne weiteres von Hand auf einen Rotierkörper aufzubringen. Die Vorrichtung der DE-OS 39 03 579 ist daher nicht geeignet, um von beliebigen rotierenden Körpern deren Drehzahl und Winkellage zu bestimmen.

Die DE-OS 37 30 102 beschreibt eine Einrichtung zur Erkennung einer Marke an einer Rotorscheibe. Hierzu wird die Marke mit Licht beleuchtet und beim Durchlauf das Abbild der Marke auf einer Photodifferenzdiode erzeugt. Der Nulldurchgang der von der Photodifferenzdiode ausgegebenen Spannung wird als Signal für das Durchlaufen des Markenbildes benutzt.

Ferner gibt es Drehzahlmesser, bei denen Hell-Dunkel-Markierungen auf der Oberfläche des rotierenden Körpers mit einer Lichtquelle, einer Photodiode, angeleuchtet werden und ein lichtempfindliches Element einen Teil des reflektierten, in seiner Intensität im Rhythmus des Hell-Dunkel-Wechsels, also drehzahlabhängig, schwankenden Lichtes erfaßt und auswertet. Auch solche opto-elektronischen Drehzahlmesser benötigen, wie die DE-AS 28 24 697, DE-OS 29 36 936, DE-OS 29 36 894 und DE-OS 39 20 627 zeigen, qualitativ aufwendige Markierungen, bzw. Signalgeber.

Der Erfindung liegt daher das Problem zugrunde, einen Drehzahlmesser und ein Verfahren zur Verfügung zu stellen, mit dem die Drehzahl bzw. die Winkellage eines beliebigen rotierenden Körpers bestimmt werden kann, ohne daß aufwendige Markierungen am rotierenden Körper selbst erforderlich sind.

Dieses Problem wird durch ein Verfahren gemäß Patentanspruch 1 sowie durch eine Sensorvorrichtung zur Durchführung dieses Verfahrens nach Anspruch 6 gelöst. Bevorzugte Weiterbildungen und Ausgestaltungen der Erfindung sind in den Unteransprüchen beschrieben.

Das erfindungsgemäße Verfahren zum Messen der Drehzahl und der Winkellage eines rotierenden Körpers erfolgt so, daß der Kontrast zwischen zwei benachbarten Punkten auf der Oberfläche des rotierenden Körpers sowie die Richtung der Änderung der optischen Dichte ermittelt werden, die Werte für positiv und negativ gerichtete Kontrastmaxima gespeichert werden und gleichzeitig beim Speichern des positiven oder negativen Kontrastmaximums ein Signal zur Auswertung bereitgestellt wird.

Die erfindungsgemäße Vorrichtung zur Durchführung dieses Verfahrens weist eine Linse auf, um das von zwei benachbarten Kontrastpunkten auf der Oberfläche des rotierenden Körpers reflektierte Licht auf zwei nebeneinander angeordnete Photoelemente, die seriell in Differenz geschaltet sind, zu fokusieren;
einen Speicher zur Aufnahme des maximalen positiven Spannungswertes (für den positiven Kontrast) aus der Differenzschaltung der Photodetektoren;
einen Speicher zur Aufnahme des maximalen negativen Spannungswertes (für den negativen Kontrast) aus der Differenzschaltung der Photodetektoren; sowie
einen Strom-Spannungs-Wandler und einen Fensterkomparator, wie einen Schmitt-Trigger, zum Erzeugen eines digitalen Signals beim Abspeichern der maximalen Spannungswerte aus der Differenzschaltung.

Die überraschenden Vorteile und Wirkungen eines solchen Verfahrens bzw. einer solchen Vorrichtung liegen darin, daß keine besonderes dimensionierten Markierungen oder Hell-Dunkel-Felder am rotierenden Körper, an der Welle, erforderlich sind. Insbesondere erübrigt sich das Anbringen von Spezialreflektoren auf der rotierenden Einrichtung. Denn nur die Markierung mit dem größten Kontrast wird bei diesem Verfahren automatisch zur Meßmarke. Kleinere Kontraste auf dem Rotierkörper bleiben unberücksichtigt, bzw. stören nicht, da nur Werte für den maximalen positiven und negativen Kontrastübergang, d.h. die maximalen positiven und negativen Spannungswerte aus der Differenzschaltung der Photodetektoren, gespeichert werden. Das Abspeichern der Spannungsextremata löst erfindungsgemäß ein Umschaltsignal aus. Die zeitliche Folge des Abspeicherns von alternierenden Spannungsmaximum und - minimum wird erfaßt und ausgewertet. D.h., aus der zeitlichen Folge der Signale werden Drehzahl und Winkellage des rotierenden Körpers errechnet.

Eine dunkle Strichmarkierung auf hellem Grund erzeugt bspw. beim Durchgang durch den abgetasteten Bereich eine zeitliche Folge mit zwei entgegen gerichtenen Kontrasten, nämlich Hell→Dunkel und Dunkel→Hell . Nur die beiden maximalen, entgegengerichteten Kontraste werden erfindungsgemäß gezählt bzw. erzeugen in der erfindungsgemäßen Vorrichtung digitale Signale.

Ein einfacher Strich von Hand mit einem Stift, mit Kreide oder mit Filzschreiber ist als Markierung auf der rotierenden Einrichtung ausreichend. Insbesondere können vorhandene "natürliche" Markierungen, wie eine Nut, eine Schraube, etc., als Meßkontrast verwendet werden. Das Aufbringen einer für die Messung geeigneten Kontrastmarke ist daher völlig problemlos. Insbesondere sind keine genau dimensionierten Hell-Dunkel-Felder auf dem rotierenden Körper erforderlich.

Auch ist keine besondere Beleuchtung des Abtastbereichs erforderlich. Tageslicht oder gewöhnliches künstliches Licht sind in aller Regel ausreichend. Denn die Bestimmung der Helligkeit der Kontrastpunkte erfolgt logarithmisch und besitzt daher einen großen Dynamikbereich. Auch eine Schwankung der allgemeinen Helligkeit geht in die Messung nicht ein, denn es werden keine absoluten Helligkeiten gemessen, sondern nur Differenzen davon.

Weitere Ziele, Merkmale und Vorteile der Erfindung ergeben sich aus der nachstehenden Beschreibung und den Ausführungsbeispielen in Verbindung mit den Zeichnungen. Es zeigen:
Figur 1 eine schematische Darstellung des Sensors für den erfindungsgemäßen Drehzahlmesser; und
Figur 2 ein Blockdiagramm des erfindungsgemäßen Verfahrens.
Figur 3 ein schematisches Schaltbild zur Durchführung des erfindungsgemäßen Verfahrens.

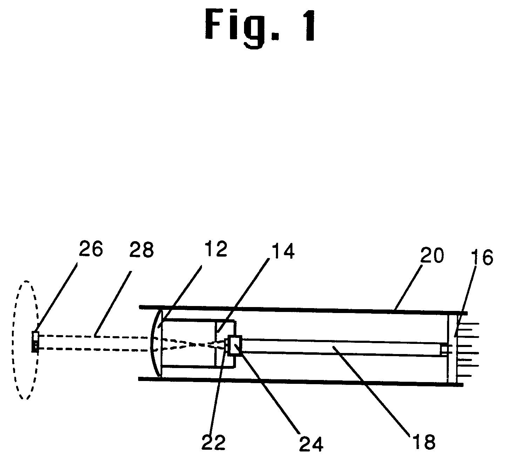

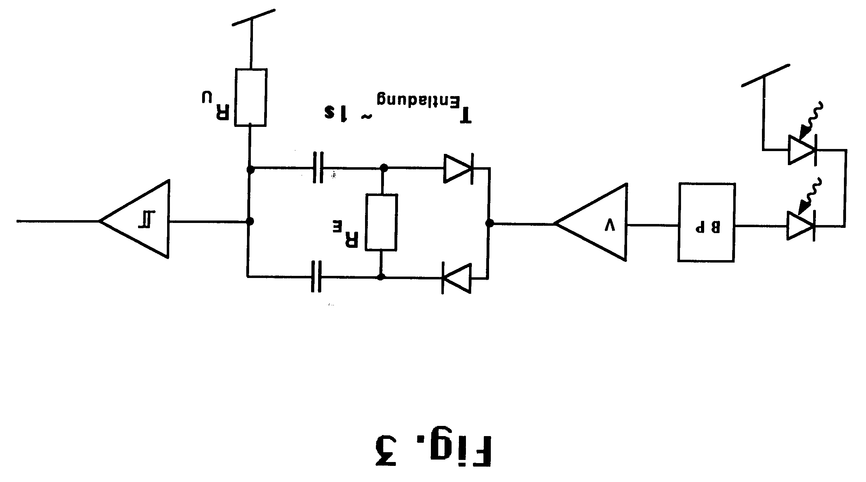

Figur 1 zeigt eine schematische Darstellung des Sensors für den erfindungsgemäßen Drehzahlmesser. Das von zwei Kontrastpunkten (26) im abgetasteten Bereich reflektierte Licht (28) wird von einer optischen Einheit aus Linse (12) und Blende (14) auf jeweils eine Photodiode (22) fokusiert. Die Fokusierung ist vorzugsweise auf "Unendlich" eingestellt, so daß die Entfernung der Kontrastpunkte vom Sensor, von den Photodioden, im Prinzip keine Rolle spielt. Die Photodioden (22) sind auf einem Trägerkörper (24) unmittelbar nebeneinander angeordnet und seriell in Differenz geschaltet, so daß bei gleicher Wellenlänge und Intensität des Lichtes auf die Photodioden (22) die resultierende Spannung aus der Differenzschaltung gleich "Null" ist. Die abgetastete Kontrastfläche auf dem rotierenden Körper ist zum Abstand und den Abmessungen der Photodioden proportional. Dies bedeutet, daß die Photodioden einerseits möglichst eng aneinander angeordnet sind, andererseits aber auch nicht zu kleine Abmessungen besitzen dürfen. Die Photodetektoren sind natürlich zur Drehrichtung des Meßobjekts senkrecht angeordnet. Gut geeignet sind rechteckige 2 x 3 mm große Si-Photodioden, deren Empfindlichkeitsmaximum bei 850 nm liegt. Die Photoelemente (22) sind in ein Gehäuse (20) eingebaut, um Streulicht abzuschirmen. Ferner ist im Gehäuse (20) eine Platine (18) mit der in Figur 3 dargestellten elektronischen Schaltung angeordnet. Der Anschluß (16) dient zur externen Signalauswertung. Die Signalauswertung ist mit einem Zeitgeber verbunden, um aus der Drehzahl und der Zeit seit Durchgang der letzten Markierung die Winkellage des rotierenden Körpers zu bestimmen.

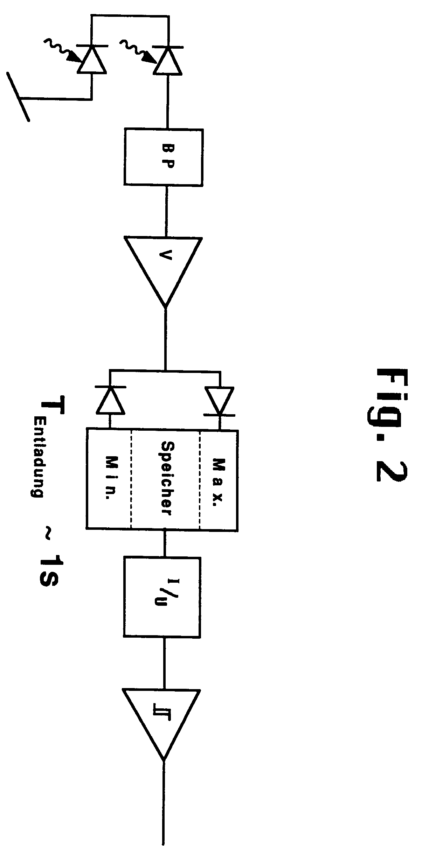

Die Figur 2 zeigt ein Blockdiagramm der erfindungsgemäßen Schaltung. Die nebeneinander angeordneten Photodioden sind in Differenz geschaltet und erzeugen einen positiven oder negativen Spannungswert je nach Richtung des Kontrastes im Meßfeld. Der resultierende Spannungswert ist zur Differenz der logarithmischen Helligkeiten der Kontrastpunkte proportional. Das Spannungssignal aus der Differenzschaltung passiert dann vorzugsweise einen Bandpaßfilter BP, um Signale mit einer untypischen Frequenz herauszufiltern. Das Signal wird verstärkt (Verstärker V) und der Wert für die maximale positive oder negative Spannung in einen Speicher (MAX-MIN-Speicher) gespeichert. Die Speicherung der maximalen Signalwerte erfolgt zeitabhängig, d.h. die gespeicherten Spannungswerte werden im Speicher kontinuierlich vermindert. Die Entladungsdauer des Speichers beträgt vorzugsweise etwa 1 Sekunde. Bei der Umkehr von einer maximal positiven zu einer maximal negativen Spannung - und umgekehrt - wird dann mit Hilfe eines I/U-Wandler und eines Schmitt-Triggers ein digitales Signal zur weiteren Auswertung erzeugt. Es werden also bei einer Umdrehung lediglich die in ihrer Richtung entgegengesetzten maximalen Kontraste auf der Oberfläche des Körpers berücksichtigt.

Die Figur.3 zeigt ein elektronisches Prinzipschaltbild zur Durchführung des erfindungsgemäßen Verfahrens. Es stehen: BP für Bandpaßfilter; R_{E} für Entladungswiderstand; R_{U} für den Widerstand des Strom-Spannungswandler; V für Verstärker; II für Schmitt-Trigger.

Der erfindungsgemäße Drehzahlsensor ist besonders geeignet, in Verbindung mit einer Einheit zum Errechnen der Winkellage, für Vorrichtungen zum Wuchten von rotierenden Körpern, insbesondere von Wellen.

## Patentansprüche

1. Verfahren zur Bestimmung der Drehzahl eines rotierenden Körpers, wobei der Kontrast aus zwei auf der Oberfläche des Körpers in Drehrichtung angeordneten benachbarten Bereichen über die Intensität des reflektierten Lichtes abgetastet wird, dadurch gekennzeichnet,
daß der Logarithmus der reflektierten Lichtintensität des jeweiligen Bereiches als Vergleichsgröße ermittelt wird;
daß die Vergleichsgrößen voneinander subtrahiert und resultierende positive und negative Differenzmaxima im Betrag zeitabhängig abnehmend gespeichert werden und
daß gleichzeitig mit dem jeweiligen Speichern positiver und negativer Differenzmaxima Signale ausgelöst werden, die zeitlich erfaßt und ausgewertet werden.

2. Verfahren nach Anspruch 1, dadurch gekennzeichnet, daß die Werte für positive und negative Differenzmaxima in ihrem Betrag zeitlich abnehmend gespeichert werden, vorzugsweise mit einer Tilgungszeit von 1 Sekunde.

3. Verfahren nach Anspruch 1 oder 2, dadurch gekennzeichnet,
daß das reflektierte Licht von zwei benachbarten Bereichen auf der Oberfläche des rotierenden Körpers auf zwei nebeneinander angeordnete Photoelemente in Differenzschaltung abgebildet wird, und
die resultierenden positiven und negativen Spannungsmaxima der in Differenz geschalteten Photoelemente getrennt gespeichert werden.

4. Verfahren nach einem der Ansprüche 1 bis 3, dadurch gekennzeichnet, daß nur reflektierte Lichtintensitätsdifferenzen in einem vorgegebenen Frequenzbereich innerhalb einer vorgegebenen Zeitdauer berücksichtigt werden.

5. Verfahren nach einem der Ansprüche 1 bis 4, dadurch gekennzeichnet, daß eine Einheit zudem die Winkellage des rotierenden Körpers berechnet.

6. Optoelektronische Sensorvorrichtung, insbesondere für die Durchführung des Verfahrens nach einem der Ansprüche 1 bis 5, dadurch gekennzeichnet,
daß eine Linse (12) das von zwei benachbarten Oberflächenbereichen (26) jeweils reflektierte Licht (28) auf zugeordnete separate Halbleiter-Photodetektoren (22) fokussiert;
die Halbleiter-Photodetektoren (22) seriell so in Differenz geschaltet sind, daß deren elektrische Potentiale voneinander subtrahiert werden;
zwei Speicher vorhanden sind, welche die aus der Differenzschaltung der Halbleiter-Photodetektoren (22) resultierenden maximal positiven und maximal negativen Spannungswerte im Betrag zeitabhängig abnehmend festhalten;
ein Strom-Spannungs-Wandler und ein Fensterkomparator, wie z.B. ein Schmitt-Trigger, vorhanden sind zum Erzeugen eines digitalen Signals beim Speichern von maximalen positiven und negativen Spannungswerten aus der Differenzschaltung.

7. Vorrichtung nach Anspruch 6, dadurch gekennzeichnet, daß sich die Speicher für die maximalen Spannungswerte innerhalb einer vorgegebenen Zeit, vorzugsweise in etwa 1 Sekunde, selbst entladen.

8. Vorrichtung nach Anspruch 6 oder 7, gekennzeichnet durch einen Bandpaßfilter, um nur Spannungsänderungen aus der Differenzschaltung innerhalb eines vorgegebenen Zeitbereichs zu berücksichtigen.

## Claims

1. Method for determining the speed of rotation of a rotating body, there being sensed by means of the intensity of the reflected light the contrast between two regions on the surface of the body, arranged neighbouring one another in the direction of rotation,
characterized in that,
the logarithms of the reflected light intensities from the respective regions are detected as comparison parameters;
in that the comparison parameters are subtracted one from the other and resulting positive and negative difference maxima are stored, diminishing in magnitude in dependence upon time and
in that simultaneously with the respective storage operations positive and negative difference maxima signals are triggered which are temporally detected and evaluated.

2. Process according to claim 1,
characterized in that,
the values for positive and negative difference maxima are stored diminishing in magnitude with time, preferably with a decay time of one second.

3. Process according to claim 1 or 2,
characterized in that,
the reflected light from two neighbouring regions on the surface of the rotating body is imaged on to two photo elements arranged next to one another and in difference connection, and
the resulting positive and negative voltage maxima of the photo elements in difference connection are stored separately.

4. Process according to any of claims 1 to 3,
characterized in that,
only differences in reflected light intensity in a predetermined frequency region, within a predetermined duration of time, are taken into consideration.

5. Process according to any of claims 1 to 4,
characterized in that,
a unit also calculates the angular disposition of the rotating body.

6. Opto-electronic sensor device, in particular for carrying out the process of any of claims 1 to 5,
characterized in that,
a lens (12) focuses the light (28) respectively reflected from two neighbouring surface regions (26) on to associated, separate semiconductor photodetectors (22);
the semiconductor photodetectors (22) are so serially connected in difference that their electric potentials are subtracted one from another;
two memories are provided which store, with magnitude diminishing in dependence on time, the maximum positive and maximum negative voltage values resulting from the difference connection of the semiconductor photodetectors (22);
a current-voltage converter and a window comparator, such as for example a Schmitt trigger, are provided for generating a digital signal upon the storage of maximum positive and negative voltage values from the difference connection.

7. Device according to claim 6,
characterized in that,
the memories for the maximum voltage values selfdischarge within a predetermined time, preferably approximately one second.

8. Device according to claim 6 or 7,
characterized by a band-pass filter, to provide that only voltage changes from the difference connection within a predetermined time period are taken into consideration.

## Revendications

1. Procédé pour déterminer la vitesse de rotation d'un objet entraîné en rotation, le contraste entre deux zones voisines situées dans le sens de rotation sur la surface de l'objet étant détecté par l'intermédiaire de l'intensité de la lumière réfléchie, caractérisé en ce que
le logarithme de l'intensité lumineuse réfléchie de la zone respective est déterminé comme grandeur de comparaison ;
les grandeurs de comparaison sont soustraites les unes des autres et les différences maximales résultantes positives et négatives sont mémorisées en valeur absolue, en fonction du temps et dans l'ordre décroissant, et
en même temps que la mémorisation respective des différences maximales positives et négatives, des signaux, qui sont détectés dans le temps et évalués, sont déclenchés.

2. Procédé suivant la revendication 1, caractérisé en ce que les valeurs absolues des valeurs des différences maximales positives et négatives sont mémorisées dans l'ordre décroissant dans le temps, de préférence suivant une cadence égale à 1 seconde.

3. Procédé suivant la revendication 1 ou la revendication 2, caractérisé en ce que
la lumière réfléchie de deux zones voisines sur la surface de l'objet entraîné en rotation est projetée sur deux cellules photoélectriques disposées l'une à côté de l'autre, dans un circuit de différence, et
les tensions maximales résultantes positives et négatives des cellules photoélectriques branchées en circuit de différence sont mémorisées séparément.

4. Procédé suivant l'une des revendications 1 à 3, caractérisé en ce que seules les différences d'intensités lumineuses réfléchies dans une gamme prescrite de fréquence pendant un intervalle de temps prescrit sont prises en compte.

5. Procédé suivant l'une des revendications 1 à 4, caractérisé en ce qu'une unité calcule en plus la position relative de l'objet entraîné en rotation.

6. Dispositif détecteur optoélectronique, notamment pour la mise en oeuvre du procédé suivant l'une des revendications 1 à 5, caractérisé en ce que
une lentille (12) focalise sur des détecteurs photoélectriques à semi-conducteurs (22) séparés et correspondants la lumière réfléchie (20) provenant respectivement de deux zones (26) voisines de la surface ;
les détecteurs photoélectriques à semi-conducteurs (22) sont branchés en série en circuit de différence de telle sorte que leurs potentiels électriques sont soustraits l'un de l'autre ;
deux mémoires sont prévues, mémoires qui conservent dans l'ordre décroissant en fonction du temps les valeurs absolues des valeurs de tensions maximales positives et négatives résultant du circuit de différence des détecteurs photoélectriques à semi-conducteurs (22) ;
un convertisseur courant-tension et un comparateur à fenêtre, par exemple un trigger de Schmitt, sont prévus pour produire un signal numérique lors de la mémorisation des valeurs maximales de tensions positives et négatives provenant du circuit de différence.

7. Dispositif suivant la revendication 6, caractérisé en ce que la mémoire destinée aux valeurs maximales de tensions se décharge elle-même pendant un temps prescrit, de préférence en 1 seconde environ.

8. Dispositif suivant la revendication 6 ou la revendication 7, caractérisé par un filtre passe-bande qui est destiné à ne prendre en compte que des variations de tension provenant du circuit de différence pendant un intervalle de temps prescrit.
